# EUROPEAN PATENT SPECIFICATION

(11) **EP 2 833 762 B1**
(45) Date of publication and mention of the grant of the patent: **13.06.2018**
(21) Application number: 13718900.7
(22) Date of filing: 06.03.2013
(51) Int. Cl.: A47J 27/62

(54) **POT LID WITH A SENSOR DEVICE**
TOPFDECKEL MIT EINER SENSORVORRICHTUNG
COUVERCLE DE POT AYANT UN CAPTEUR

(30) Priority: 02.04.2012 SI 201200102
(43) Date of publication of application: 11.02.2015
(73) Proprietor: Gorenje Gospodinjski aparati d.d., 3503 Velenje (SI)
(72) Inventor: BREZOVNIK, Blaz, 3313 Polzela (SI)
(74) Representative: Ivancic, Bojan
(86) International application number: PCT/IB2013/051771
(87) International publication number: WO 2013/150397

(56) References cited:
- EP-A2- 1 152 316
- DE-A1-102008 051 265
- US-A- 5 951 900
- US-A1- 2010 156 645

## Description

The present invention refers to a pot lid with a sensor device, in particular to a lid of a household pot, said sensor device being attached to said pot lid.

A pot lid with a sensor device is known and formed in a manner that a sensor device is incorporated into a handle of a household pot. Similar solution, for instance, has been disclosed in the publication of the patent application No. US 2010/156645 A1. Said document discloses an apparatus for determining and displaying or monitoring at least one operating state for a cooking vessel. To this extent, an opening is required in the lid of the cooking vessel in order for the adjusting element to be admitted into.

Another similar solution has been disclosed in the publication of the patent application No. DE 10 2008 051265 A1. Said document discloses a device having a sensor device detecting a parameter influencing cooking process, and a data interface device. Furthermore, said document teaches that the body of the device may be connected to the cooking vessel by means of a coupling device. It is meant for the coupling device to be formed as a plug-in device or as a magnetic holding device in order to obtain a force-locking joint of the power supply contacts and the data exchange contacts.

Both known solutions, however, have drawbacks such as an opening in the lid for the sensor device or the coupling device to reach the interior of the cooking vessel.

It is the object of the present invention to create a pot lid with a sensor device which remedies drawbacks of the know solutions and can be arranged on all lid types, in particular onto the spatially curved lids of the household pots.

The object as set above is solved with characteristics as set forth in claim 1. Details of the invention can be obtained from subclaims.

The invention is further described in detail by way of non-limiting preferred embodiment, and with a reference to the accompanying drawing, where
- Fig. 1: shows a three-dimensional exploded view of a household pot with a sensor device according to the invention,
- Fig. 2: shows a longitudinal cross-sectional view of a sensor device of Fig. 1.

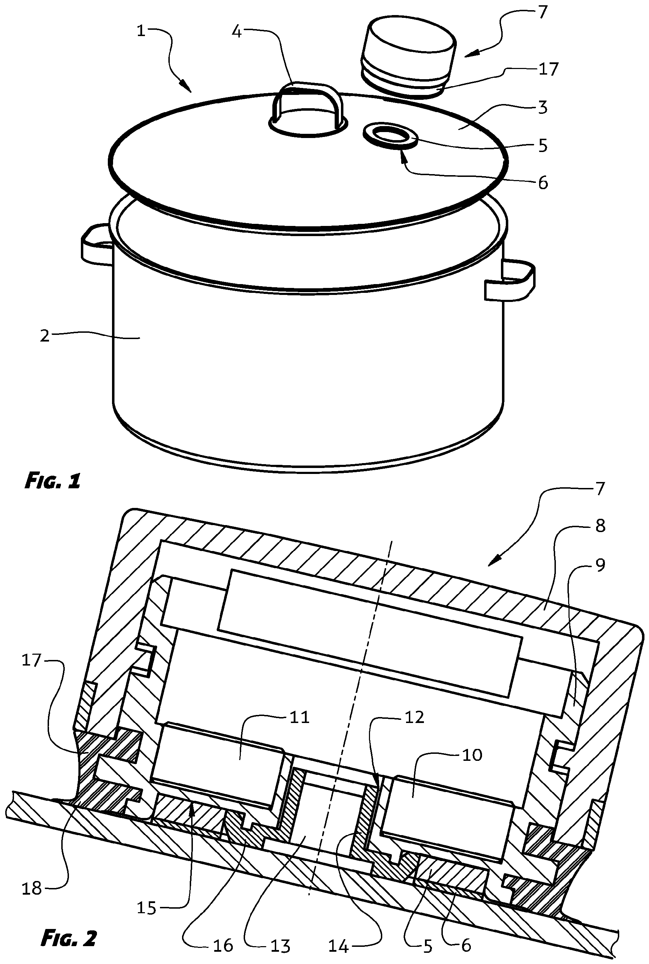

Fig. 1 shows a lid 1 of a household pot 2, said lid 1 being formed either of magnetic material, such as steel for example, either of non-magnetic material, such as glass, plastic and similar, for example. In the embodiment shown said lid 1 is formed as a spatially curved glass surface 3, a thin-walled cup for instance, a handle 4 being arranged at the apex thereof in order to manipulate with said lid. Spaced from said handle 4, a ring-shaped interface 5 is arranged on said surface 3, in essence on the side of the surface 3 averted from said pot 2, said interface 5 being bonded by means of an adhesive layer 6 to said surface 3. A sensor device 7 being removable attached to said interface 5 which is made of magnetic material.

Fig. 2 shows a cross-sectional view of said sensor device 7 which is via said ring-shaped interface 5 removable attached to said pot lid 2. According to the invention, said demountable connection between said interface 5 and said device 7 is formed as a magnetic bond. Therefore, an insertion 9 being arranged in the body 8 of the sensor device 7, said insertion 9 embodying at least one permanent magnet, preferably two permanent magnets 10, 11. Said magnets 10, 11 are mutually spaced in said insertion 9 and arranged in a manner that the polarity thereof is reversed; it means that, when viewed in direction perpendicular to said surface 3 of the lid 1, the poles of the first magnet 10 are oriented in direction N-S whereas the poles of the second magnet 11 are oriented in direction S-N. Furthermore, said insertion 9 is formed with a centric through-hole 12 extending between said magnets 10, 11, a probe 13 protected with a sealing cover 14 being arranged in said hole 12. Said insertion 9 is further formed on the side facing said surface 3 of the lid 1 with a ring-shaped depression 15 intended to cooperate with said interface 5.

Said sealing cover 14 is formed on the side thereof facing said surface 3 of the lid 1 with a radially extending flange 16 which, with the sensor device 7 according to the invention being fitted, sealingly abuts against said surface 3 of the lid 1. It is provided for, according to the present invention, that the depth of said depression 15 in said insertion 9 is greater than the entire thickness of the interface 5 and the layer 6 so that the latter two are entirely located within said depression 15 when the sensor device 7 according to the invention is fitted. In order to achieve that condition, an elastic deformation of certain parts of the sensor device 7 according to the invention is required during installation thereof.

Preferably, it is provided for according to the present invention that said sealing cover 14 is formed of elastic material, such as silicone rubber for instance, so that it is capable of being elastically deformed when pressed against said surface 3 during installation of the sensor device 7 onto the lid 1. Simultaneously with said elastic deformation of the sealing cover 14 said probe 13 is displaced in the axial direction of the body 8 of the sensor device 7, thus, accommodating easily to the curvature of each lid 1 used and still pressing securely against the surface 3 of the lid 1 reading the required parameters during operation. In addition, said body 8 is provided at the side thereof facing said surface 3 of the lid 1 with a circumferentially extending elastic ring 17 intended to cooperate with said surface 3. At the location of the cooperation with said surface 3, said elastic ring 17 is provided over the entire circumference thereof with an elastic lip 18 extending both in longitudinal direction of said body 8 and in the direction toward said surface 3. When installing sensor device 7 according to the invention onto said lid 1 and said surface 3, respectively, said lip 18 is deformed likewise, contributing additionally to the sealing of said sensor device 7 against the lid 1.

While the foregoing written description enables one of ordinary skill to make and use what is considered presently to be the best mode thereof, those of ordinary skill will understand and appreciate the existence of variations, combinations, and equivalents of the specific exemplary embodiment herein. The invention should therefore not be limited by the above described embodiment, but by all embodiments within the scope of the claims.

## Claims

1. Pot lid with a sensor device (7), in particular a lid of a household pot (2), said sensor device (2) being attached to said pot lid (1), wherein a bond between said sensor device (7) and said lid (1) of the pot (2) is provided as a magnetic bond, ***characterized in that*** said sensor device (7) is removably attached by means of a magnetic bond to a ring-shaped interface (5) of magnetic material, said interface (5) being arranged on said lid (1) on the side averted from said pot (2) and bonded by means of an adhesive layer (6) to said lid (1).

2. Pot lid with a sensor device according to claim 1, ***characterized in that*** said magnetic bond is obtained by cooperation of the ring-shaped interface (5) and at least one permanent magnet (10, 11) arranged in a body (8) of said sensor device (7).

3. Pot lid with a sensor device according to claim 1, ***characterized in that*** said magnetic bond is obtained by cooperation of the ring-shaped interface (5) and two permanent magnets (10, 11) arranged in the body (8) of said sensor device (7), wherein the polarity of said magnets (10, 11) is reversed so that the poles of the first magnet (10) are oriented in direction N-S whereas the poles of the second magnet (11) are oriented in direction S-N.

4. Pot lid with a sensor device according to any of the preceding claims, ***characterized in that*** said lid (1) is formed of non-magnetic material, such as glass, plastic and similar.

5. Pot lid with a sensor device according to any of the preceding claims 3 or 4, ***characterized in that*** an insertion (9) embodying two permanent magnets (10, 11) is arranged in a body (8) of said sensor device (7), said insertion (9) being formed with a centric through-hole (12) extending between said magnets (10, 11), a probe (13) being arranged in said hole (12).

6. Pot lid with a sensor device according to claim 5, ***characterized in that*** said probe (13) is protected by means of a sealing cover (14), wherein said insertion (9) is formed on the side facing said curved surface (3) of the lid (1) with a ring-shaped depression (15) intended to cooperate with said interface (5), and wherein said body (8) is provided at the side thereof facing said surface (3) of the lid (1) with a circumferentially extending elastic ring (17) which is provided at the location of the cooperation with said surface (3) and over the entire circumference thereof with an elastic lip (18) extending both in longitudinal direction of said body (8) and in the direction toward said surface (3).

## Patentansprüche

1. Topfdeckel mit einer Sensorvorrichtung (7), insbesondere ein Deckel eines Haushaltstopfes (2), wobei die Sensorvorrichtung (7) an dem Topfdeckel (1) angeordnet ist, worin eine Bindung zwischen der Sensorvorrichtung (7) und dem Deckel (1) des Topfes (2) als magnetische Bindung vorgesehen ist, ***dadurch gekennzeichnet, dass*** die Sensorvorrichtung (7) abnehmbar mittels einer magnetischen Bindung an einer ringförmigen Schnittstelle (5) aus magnetischem Material angebracht ist, wobei die Schnittstelle (5) auf dem Deckel (1) an der Seite, die von dem Topf (2) abgewandt ist, angeordnet ist und mittels einer Klebschicht (6) mit dem Topf (1) verbunden ist.

2. Topfdeckel mit einer Sensorvorrichtung gemäß Anspruch 1, ***dadurch gekennzeichnet, dass*** die magnetische Bindung durch Zusammenwirken der ringförmigen Schnittstelle (5) und mindestens einem Permanentmagneten (10, 11), der in einem Gehäuse (8) der Sensorvorrichtung (7) angebracht ist, erhalten wird.

3. Topfdeckel mit einer Sensorvorrichtung gemäß Anspruch 1, ***dadurch gekennzeichnet, dass*** die magnetische Bindung durch Zusammenwirken der ringförmigen Schnittstelle (5) und zwei Permanentmagneten (10, 11), die in einem Gehäuse (8) der Sensorvorrichtung (7) angeordnet sind, wobei die Polarität der Magnete (10,11) umgedreht ist, so dass die Pole des ersten Magneten (10) in Richtung N-S orientiert sind, während die Pole des zweiten Magneten (11) in Richtung S-N orientiert sind.

4. Topfdeckel mit einer Sensorvorrichtung gemäß einem der vorstehenden Ansprüche, ***dadurch gekennzeichnet, dass*** der Deckel (1) aus nicht magnetischem Material, wie Glas, Plastik und ähnlichem, gebildet ist.

5. Topfdeckel mit einer Sensorvorrichtung gemäß einem der vorstehenden Ansprüche 3 oder 4, ***dadurch gekennzeichnet, dass*** ein Einsatz (9) zwei Permanentmagnete (10, 11) enthält, in einem Gehäuse (8) der Sensorvorrichtung (7) angeordnet sind, wobei der Einsatz (9) mit einer zentrischen Durchgangsöffnung (12) ausgebildet ist, die sich zwischen den Magneten (10,11) erstreckt, wobei eine Messsonde (13) in der Öffnung (12) angeordnet ist.

6. Topfdeckel mit einer Sensorvorrichtung gemäß Anspruch 5, ***dadurch gekennzeichnet, dass*** die Messsonde (13) mittels eines Verschlussdeckels (14) geschützt ist, wobei der Einsatz (9) auf der Seite ausgebildet ist, die der gekrümmten Oberfläche (3) des Deckels (1) mit einer ringförmigen Vertiefung (15) zugewandt ist, die mit der Schnittstelle (5) zusammenwirken soll, und wobei das Gehäuse (8) an der Seite davon vorgesehen ist, die der Oberfläche (3) des Deckels (1) mit einem umlaufend sich erstreckenden elastischen Ring (17) zugewandt ist, der an der Stelle des Zusammenwirkens mit der Oberfläche (3) und über den gesamten Umfang davon mit einer elastischen Lippe (18) versehen ist, die sich sowohl in Längsrichtung des Gehäuses (8) als auch in Richtung auf die Oberfläche (3) erstreckt.

## Revendications

1. Couvercle de pot ayant un dispositif de capteur (7), en particulier un couvercle d'une marmite (2), ledit dispositif de capteur (2) étant fixé audit couvercle de pot (1), une liaison entre ledit dispositif de capteur (7) et ledit couvercle (1) du pot (2) étant prévue sous la forme d'une liaison magnétique, **caractérisé par le fait que** ledit dispositif de capteur (7) est fixé de manière amovible au moyen d'une liaison magnétique à une interface en forme d'anneau (5) faite de matériau magnétique, ladite interface (5) étant disposée sur ledit couvercle (1) sur le côté à l'opposé dudit pot (2) et liée au moyen d'une couche adhésive (6) audit couvercle (1).

2. Couvercle de pot ayant un dispositif de capteur selon la revendication 1, **caractérisé par le fait que** ladite liaison magnétique est obtenue par coopération de l'interface en forme d'anneau (5) et d'au moins un aimant permanent (10, 11) disposé dans un corps (8) dudit dispositif de capteur (7).

3. Couvercle de pot ayant un dispositif de capteur selon la revendication 1, **caractérisé par le fait que** ladite liaison magnétique est obtenue par coopération de l'interface en forme d'anneau (5) et de deux aimants permanents (10, 11) disposés dans le corps (8) dudit dispositif de capteur (7), la polarité desdits aimants (10, 11) étant inversée de telle sorte que les pôles du premier aimant (10) sont orientés dans une direction N-S tandis que les pôles du second aimant (11) sont orientés dans une direction S-N.

4. Couvercle de pot ayant un dispositif de capteur selon l'une quelconque des revendications précédentes, **caractérisé par le fait que** ledit couvercle (1) est formé de matériau non-magnétique, tel que le verre, une matière plastique et analogue.

5. Couvercle de pot selon l'une quelconque des revendications 3 ou 4, **caractérisé par le fait qu'**un insert (9) intégrant deux aimants permanents (10, 11) est disposé dans un corps (8) dudit dispositif de capteur (7), ledit insert (9) étant formé avec un trou traversant centré (12) s'étendant entre lesdits aimants (10, 11), une sonde (13) étant disposée dans ledit trou (12).

6. Couvercle de pot ayant un dispositif de capteur selon la revendication 5, **caractérisé par le fait que** ladite sonde (13) est protégée au moyen d'un capot d'étanchéité (14), ledit insert (9) étant formé sur le côté faisant face à ladite surface courbe (3) du couvercle (1) avec un creux en forme d'anneau (15) destiné à coopérer avec ladite interface (5), et ledit corps (8) étant muni, au niveau de son côté faisant face à ladite surface (3) du couvercle (1), d'un anneau élastique s'étendant de manière circonférentielle (17) qui est situé à l'emplacement de la coopération avec ladite surface (3) et est muni, sur toute sa circonférence, d'une lèvre élastique (18) s'étendant à la fois dans la direction longitudinale dudit corps (8) et dans la direction vers ladite surface (3).
